# EUROPÄISCHE PATENTSCHRIFT

(11) **EP 1 193 376 B1**
(45) Veröffentlichungstag und Bekanntmachung des Hinweises auf die Patenterteilung: **24.01.2007**
(21) Anmeldenummer: 02000690.4
(22) Anmeldetag: 13.07.1999
(51) Int. Cl.: F01N 11/00, F01N 3/20, F02D 41/04

(54) **Regelung eines NOx-Speicherkatalysators**
Control of an NOx-storage catalyst
Commande d'un catalyseur accumulateur de nox

(30) Priorität: 05.08.1998 DE 19835381; 04.11.1998 DE 19850786
(43) Veröffentlichungstag der Anmeldung: 03.04.2002
(62) Teilanmeldung aus: 99936519.0
(73) Patentinhaber: Volkswagen Aktiengesellschaft, 38436 Wolfsburg (DE)
(72) Erfinder: Hahn, Hermann, 30175 Hannover (DE)
(74) Vertreter: Meyer, Enno

(56) Entgegenhaltungen:
- EP-A- 0 899 430
- US-A- 5 201 173
- US-A- 5 501 074
- US-A- 5 577 383

## Beschreibung

Das Verfahren betrifft die Regelung eines NOx-Absorber-Katalysators einer zeitweise mager laufenden Brennkraftmaschine mit einer in Abgasströmungsrichtung hinter dem Katalysator angeordneten NOx-empfindlichen Meßeinrichtung und einer Steuereinheit.

Aus der US 5 577 383 ist eine Vorrichtung zur Reinigung eines Abgases einer Brennkraftmaschine bekannt. Das Abgas wird hier durch einen vorgeschalteten Katalysator nahe der Brennkraftmaschine und anschließend durch einen Hauptkatalysator stromabwärts geführt. Die Brennkraftmaschine wird vom Start an für eine Zeitdauer bis der Hauptkatalysator auf eine Temperatur erhitzt ist, bei welcher der Katalysator eine ausreichende Wirkung entfaltet, mit einem Gemisch betrieben, das fetter ist als durch das stöchiometrische Luft-Kraftstoffgemisch-Verhältnis bestimmt. Der vorgeschaltete Katalysator kann durch Verbrennung des in einem fetten Bereich erzeugten Abgases bei geringeren Temperaturen arbeiten. Der Hauptkatalysator kann mit der erzeugten Verbrennungswärme aufgeheizt werden, wodurch sich eine Steigerung des Abgasreinigungsvermögens ergibt.

Die US 5 501 074 offenbart ein Abgasnachbehandlungssystem, das einen Katalysator auf Zeolitbasis aufweist, um NOx im Abgas zu reduzieren und das Abgas zu reinigen. Bei diesem System wird das Luft-Kraftstoff-Verhältnis kontrolliert und in Abhängigkeit von der Temperatur im Abgas vor dem Katalysator variiert, wenn ein Schwellenwert überschritten ist.

Die US 5 201 173 beschreibt ein Abgasnachbehandlungssystem zur Reinigung des Abgases con NOx-Komponenten, bei dem die Temperatur im Katalysator gemessen und mit einem Schwellenwert verglichen wird und gegebenenfalls eine Abgasrückführung durchgeführt wird.

Aus der EP 899 430 geht ein Abgasnachbehandlungssystem hervor, bei dem in der NOx-Falle angesammelte Verunreinigungen entfernt werden. Zunächst wird dabei die Menge einer Verunreinigung, die sich in einer im Abgasweg des Motors angeordneten NOx-Falle angesammelt hat, abgeschätzt. Im zweiten Schritt wird das Luft-Kraftstoff-Verhältnis variiert, wenn die geschätzte Verunreinigungsmenge einen Schwellenwert erreicht hat. Danach wird die Falle gespült bis einen vorgegebenes Spülkriterium reicht ist.

Bei zeitweise mager laufenden Motoren befindet sich im Abgastrakt dieses Motors üblicherweise ein NOx-Speicherkatalysator. Hinter diesem NOx-Speicherkatalysator ist eine Meßeinrichtung angeordnet, die in der Lage ist, die NOx-Konzentration im Abgas zu messen, beispielsweise ein NOx-Sensor, wie dies in Bild 1 dargestellt ist. Das System verfügt weiter über eine Motorsteuerungseinheit, die das gemessene NOx-Signal verarbeiten und den Betriebszustand des Motors steuern kann. In dieser Motorsteuerungseinheit ist ferner der aktuelle Abgasvolumenstrom zur Berechung des NOx-Massenstromes, die Temperatur des NOx-Speicherkatalysators (durch Rechenmodelle oder Meßeinrichtungen), Modelle oder Meßeinrichtungen zur Bestimmung der vom Motor abgegebenen NOx-Rohemissionen, Modelle oder Meßeinrichtungen zur Bestimmung der im NOx-Speicherkatalysator im Magerbetrieb gespeicherten bzw. im Regenerierbetrieb abgegebenen NOx-Massen sowie Kontrollfunktionen, die für eine dem Beladungszustand des NOx-Speicherkatalysators entsprechende Regenerationszeit und -verfahrensweise bestimmen, bekannt oder vorhanden.

Bislang konnte in dem dargestellten System die im NOx-Speicherkatalysator gespeicherte NOx-Masse nur über Modelle berechnet werden. Über eine dem NOx-Speicherkatalysator nachgeschaltete Lambda-Sonde ist es weiter möglich gewesen, die Dauer der Regenerationszeit zu ermitteln und daraus Rückschlüsse auf die eingespeicherte NOx-Masse zu ziehen. Insbesondere konnte bislang aber nicht ermittelt werden, wieviel NOx unkonvertiert den NOx-Speicherkatalysator passiert.

Der Erfindung liegt daher die Aufgabe zugrunde, ein Verfahren zur Steuerung eines NOx-Absorber-Katalysators zu entwickeln, das einen optimaleren Betrieb des Katalysators ermöglicht.

Die Aufgabe wird durch die Merkmale des Anspruchs 1 gelöst. Bevorzugte Ausgestaltungen der Erfindung sind Gegenstand der Unteransprüche.

Bei dem erfindungsgemäßen Verfahren zur Regelung eines NOx-Absorber-Katalysators einer Brennkraftmaschine wird der Magerbetrieb in Abhängigkeit von der Katalysatortemperatur freigegeben. Genauer bedeutet dies, daß der Magerbetrieb gesperrt wird, wenn die Katalysatortemperatur kleiner als eine vorbestimmte minimale Katalysatortemperatur oder größer als eine vorgegebene maximale Katalysatortemperatur ist, wobei die minimale und maximale Katalysatortemperatur veränderbare Größen sind, wobei
die minimale Katalysatortemperatur um ein vorgegebenes Temperaturintervall erhöht wird, wenn die Katalysatortemperatur unter einer vorbestimmten Schwelltemperatur liegt und eine Magerintervalldauer oder Regenerationsintervalldauer kleiner als eine vorgegebene minimale untere Magerintervalldauer oder Regenerationsintervalldauer ist, bzw. die maximale Katalysatortemperatur um das vorgegebene Temperaturintervall erniedrigt wird, wenn die Katalysatortemperatur oberhalb der vorbestimmten Schwelle liegt und die Magerintervalldauer oder Regenerationsintervalldauer kleiner als eine vorgegebene minimale obere Magerintervalldauer oder Regenerationsintervalldauer ist.

Im Fall des Niedertemperaturzweigs, d.h. wenn die Katalysatortemperatur unter einer vorbestimmten Schwelltemperatur liegt, wird ferner die minimale Katalysatortemperatur um das vorgegebene Temperaturintervall erniedrigt, falls die Differenz aus Katalysatortemperatur und minimaler Katalysatortemperatur kleiner als das vorbestimmte Temperaturintervall und die Magerintervalldauer oder Regenerationsintervalldauer länger als eine vorgegeben minimale niedere Magerintervalldauer oder Regenerationsintervalldauer ist.

Im Fall des Hochtemperaturzweigs, d.h. wenn die Katalysatortemperatur oberhalb der vorbestimmten Schwelle liegt, wird die maximale Katalysatortemperatur um das vorgegebenen Temperaturintervall erhöht, falls die Differenz aus maximaler Katalysatortemperatur und Katalysatortemperatur kleiner als das Temperaturintervall und die Magerintervalldauer oder Regenerationsintervalldauer länger als eine vorgegeben minimale hohe Magerintervalldauer oder Regenerationsintervalldauer ist.

Wie oben erwähnt kann anstelle der Magerintervalldauer kann auch durch die Auswertung eines möglichen Sauerstoffsignales des NOx-Sensors oder des Sauerstoffsignales einer eventuell anstelle eines NOx-Sensors eingebauten Lambda-Breitband- oder Sprungsonde die NOx-Regenerationszeit des Katalysators bestimmt und diese mit einer minimal notwendigen Regenerationszeit verglichen werden. Der Algorithmus des Verfahrens ist der gleiche wie der über die Magerintervalldauer, nur daß anstelle der Magerintervalldauer eine Regenerationsintervalldauer verwendet wird, die im Niedertemperaturzweig mit einer niederen minimalen Regenerationsintervalldauer und im Hochtemperaturzweig mit einer hohen Regenerationsintervalldauer verglichen wird.

Bevorzugte Ausführungsformen der Erfindung werden nachfolgend anhand der Zeichnungen näher erläutert.

Bevorzugte Ausführungsformen der Erfindung werden nachfolgend anhand der Zeichnungen näher erläutert.
- Fig. 1: zeigt die Anordnung eines NOx-Absorber-Katalysators einer Brennkraftmaschine mit NOx-Sensor,
- Fig. 2: zeigt ein Flußdiagramm zum Regelungsablauf des NOₓ-Speicherkatalysators mit einem nach dem NOₓ- Speicherkatalysator gemessenen NOₓ- Signal,
- Fig. 3: zeigt ein Flußdiagramm einer Erweiterung des Verfahrens der Fig. 2, und
- Fig. 4: zeigt ein Flußdiagramm des für die Freigabe des Magerbetriebs in Abhängigkeit von der Katalysatortemperatur verantwortlichen Verfahrens, dargestellt anhand einer Funktion BKSK.

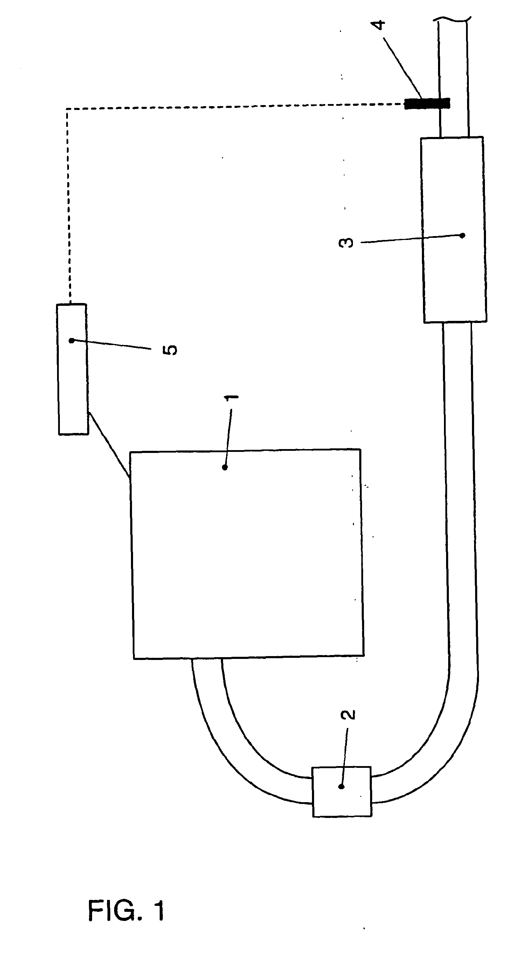

Fig. 1 zeigt eine zeitweise mager betreibbare Brennkraftmaschine 1, die einen optionalen Vorkatalysator 2, einen NOx-Absorber-Katalysator 3, einen NOx-Sensor 4 und/oder eine λ-Sonde 4 sowie ein Steuergerät 5, das für das Motormanagement zuständig ist, aufweist.

Das Steuergerät 5 verarbeitet das gemessene NOx-Signal und steuert den Betriebszustand des Motors 1. Hieraus ist dem Steuergerät 5 (z. B. über hinterlegte Kennfelder) ferner der aktuelle Abgasvolumenstrom und hieraus der NOx-Massenstrom nach dem Speicherkatalysator 3, die Temperatur des NOx-Speicherkatalystors 3 und der NOx-Rohemission-Massenstrom bekannt. Aus diesen Werten kann die im NOx-Speicher 3 eingelagerte NOx-Menge berechnet werden. Ggf. kann auch aus der nach dem Speicherkatalysator 3 gemessenen NOx-Menge unter Berücksichtigung des NOx-Schlupfes (temperatur- bzw. massenstromabhängig) die gespeicherte NOx-Menge ermittelt werden. Die eingespeicherte NOx-Menge im Katalysator 3 stellt somit eine im Zusammenhang mit dem Signal des NOx-Sensors 4 stehende Größe dar.

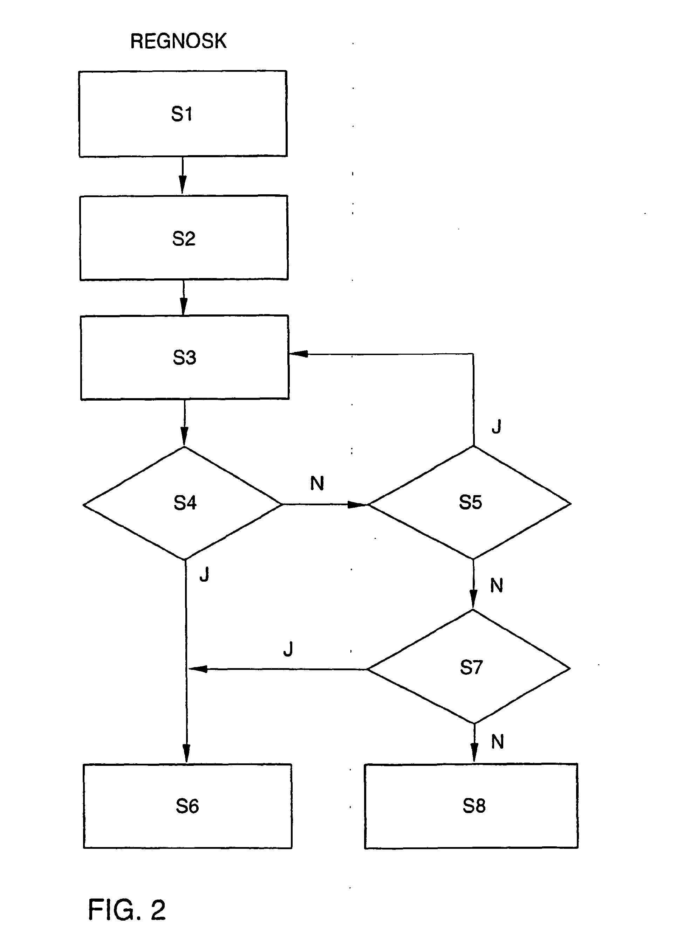

Fig. 2 zeigt den Ablauf der Funktion REGNOSK zur Regelung des NOx-Speicherkatalysators mit dem nach NOx-Speicherkatalysator gemessenen NOx-Signal. Im Schritt S1 wird in den mageren Motorbetrieb umgeschaltet. Daraufhin wird im Schritt S2 und damit dem Beginn der NOx-Einspeicherung am NOx-Speicherkatalysator die Größe MNONK, welche die integrierte NOx-Masse nach NOx-Speicherkatalysator wiedergibt, mit einem Startwert initialisiert. Der Startwert beträgt im allgemeinen Null.

Der Zeitpunkt des NOx-Einspeicherbeginns kann durch Größen im Steuergerät unter Berücksichtigung der Gaslaufzeiten bestimmt werden. Verfügt die NOx-Meßeinrichtung über ein zusätzliches Lambda-Meßsignal und ist dieses im Steuergerät bekannt, so kann dieses alternativ oder in Kombination herangezogen werden.

Für die Dauer des Magerbetriebes wird der NOx-Massenstrom solange im Schritt S3 aufintegriert, bis der zulässige Grenzwert erreicht ist, was im Schritt S4 abgefragt wird. Ist der zulässige Grenzwert noch nicht erreicht, so wird im Schritt S5 der Motorenstatus mager/fett abgefragt. Ist der Motorenstatus weiterhin mager, so wird zum Schritt S3, der Integration, zurückgekehrt. Alternativ kann als zulässige Grenze auch eine gewisse NOx-Konzentration definiert werden. Im Steuergerät wird dann eine Regeneration des NOx-Speicherkatalysators angefordert (Schritt S6). Der zulässige Grenzwert richtet sich dabei hauptsächlich nach den aktuellen Emissionsvorschriften.

Wird aus anderen Gründen (z. B. Beschleunigungsanforderung) vor Erreichen des Grenzwertes in den stöchiometrischen oder fetten Motorbetrieb geschaltet, so ist der Motorenstatus im Schritt S5 "nicht mager". Im Schritt S7 wird daher abgefragt, ob die bereits gespeicherte NOx-Masse eine Regeneration erforderlich macht. Ist dies nicht der Fall, so wird keine Regeneration (Schritt S8) angefordert. Ist eine Regeneration notwendig, so wird im Schritt S6 eine Speicher-Katalysator-Regeneration angefordert, da die eingespeicherte NOx-Masse über einem gewissen Schwellwert liegt. Dieser Schwellwert ist hauptsächlich beschichtungs- und volumenspezifisch von der Gesamt-Speicherfähigkeit des NOx-Speicherkatalysators abhängig.

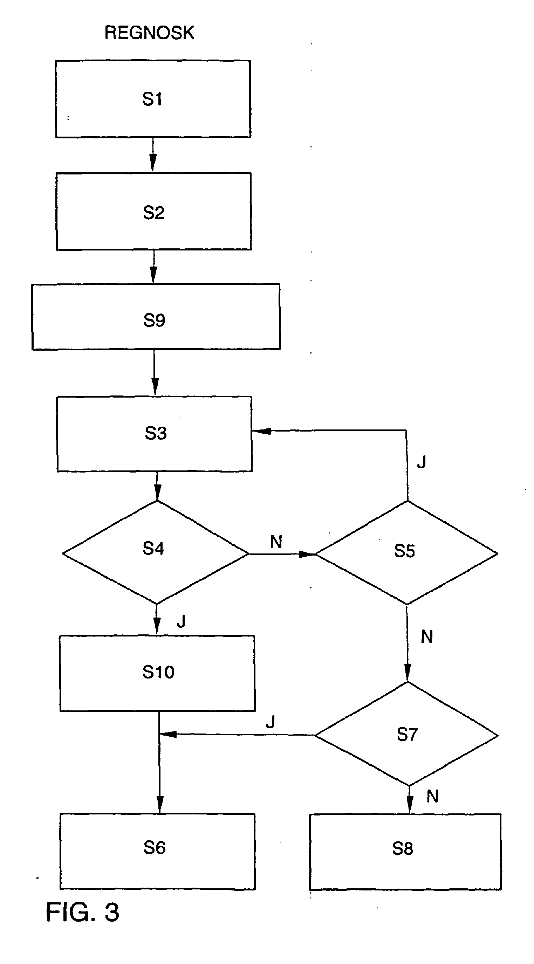

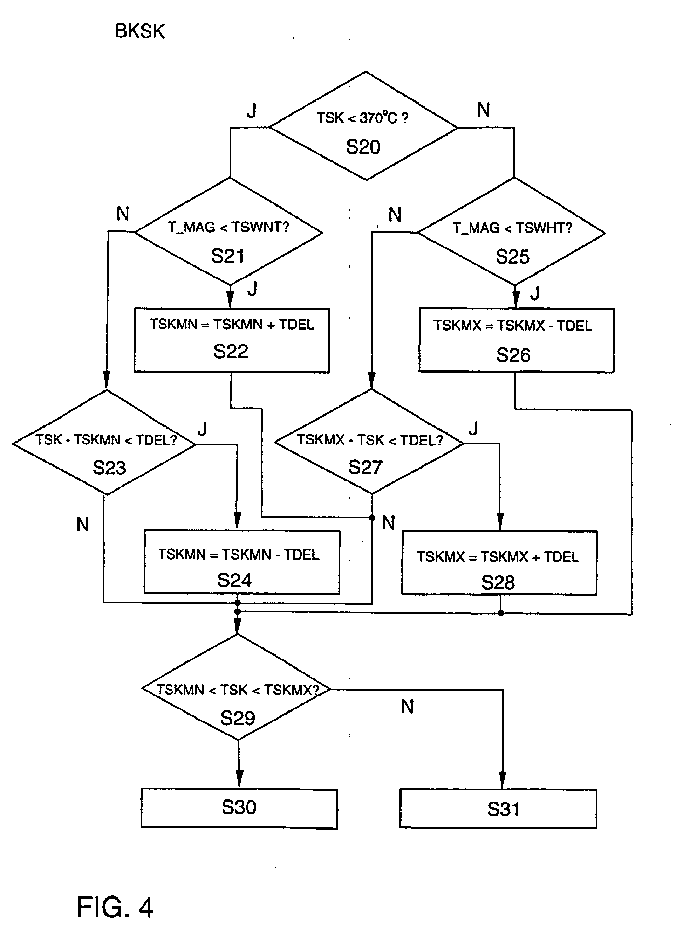

Fig. 3 zeigt eine um die Funktion "Bestimmung der Magerintervalldauer" ergänzte Steuerung, damit die NOx-Speicherfähigkeit des NOx-Speicherkatalysators in verschiedenen Alterungs- und Vergiftungszuständen optimal ausgenutzt werden kann. Hier wird gleichzeitig mit der Initialisierung von MNONK (Schritt S2) beim Umschalten in den Magerbetrieb (Schritt S1) im Schritt S9 die Variable T_MAG für die Magerintervalldauer mit Null initialisiert. Nach Erreichen des zulässigen NOx-Schwellwertes und der Regenerationsanforderung wird im Schritt S10 die Magerintervalldauer festgehalten und kann zur Auswertung an die Funktion BKSK (Betriebskoordination NOx-Speicherkatalysator), die in der Fig. 4 erläutert werden wird, übergeben werden. Die restlichen Verfahrensschritte der Fig. 3 entsprechen denjenigen der Figur 2.

Die in Figur 4 dargestellte Funktion BKSK ist für die Freigabe des Magerbetriebes in Abhängigkeit von der NOx-Speicherkatalysator-Temperatur verantwortlich. Durch ständiges Abfragen der oberen und unteren Temperaturgrenzen werden insbesondere eventuelle Ungenauigkeiten des Katalysator-Temperaturmodelles ausgeglichen. Es sind definiert: TSK als aktuelle Temperatur des NOx-Speicherkatalysators, TSKMN als minimal zulässige Temperatur des NOx-Speicherkatalysators, TSKMX als maximal zulässige Betriebstemperatur des NOx-Speicherkatalysators und TDEL als applizierbare Hysteresenbreite oder Temperaturintervall (z. B. 10°C), die sinnvollerweise für alle Bedingungen konstant gehalten werden sollte. Ferner bedeutet T_MAG die Dauer des Magerintervalls, TSWNT die minimale niedere Magerintervalldauer, TSWHT die minimale hohe Magerintervalldauer und THR die Schwellentemperatur zur Bestimmung des Nieder- und Hochtemperaturzweigs.

Der Magerbetrieb wird gesperrt werden, wenn TSK < TSKMN oder TSK> TSKMX ist, da mit dem Unterschreiten der minimalen Katalysatortemperatur ein Einspeichern Von NOx in den Katalysator nicht möglich ist, bzw. da mit dem Überschreiten der maximal zulässigen Katalysatortemperatur ein Einspeichern nicht mehr möglich ist.

Beim Initialisieren der Funktion, z. B. bei Austausch des Steuergerätes, werden die Werte TSKMN und TSKMX mit katalysatorspezifischen Ausgangswerten initialisiert.

In der Funktion wird zwischen einem Niedertemperaturzweig, wenn sich die Katalysatortemperatur im Bereich des unteren Grenzwertes bewegt, und einem Hochtemperaturzweig, wenn sich die Katalysatortemperatur im Bereich des oberen Grenzwertes bewegt, unterschieden. Dazu wird die aktuelle Katalysatortemperatur im Vergleich zu einer applizierbaren Temperatur THR (z. B. 370°C) abgefragt (Abfrage S20).

Im Niedertemperaturzweig wird die beispielsweise die von der Funktion REGNOSK bestimmte Magerintervalldauer T_MAG kleiner als die minimal niedere vorgegebene Magerintervalldauer TSWNT (applizierbar), was in der Abfrage S21 geprüft wird, so ist TSKMN offenbar zu niedrig angesetzt, da der Katalysator noch nicht einspeichern kann. Es wird daher TDEL zu TSKMN addiert (Schritt S22). Bewegt sich der NOx-Speicherkatalysator aber im Bereich von maximal TDEL über TSKMN mit noch ausreichender NOx-Einspeicherung, d. h. TSK-TSKMN<TDEL (Abfrage S23) so wird ermöglicht, eine Konvertierung auch bei noch niedrigeren Temperaturen vorzunehmen indem im Schritt S24 von TSKMN der Temperaturbetrag TDEL abgezogen wird.

Im Hochtemperaturzweig (Schritt S20) wird wie folgt vorgegangen: Ist die von REGNOSK übergebene Magerintervalldauer T_MAG kleiner als die minimal hohe vorgegebene Magerintervalldauer TSWHT (Abfrage S25), so ist die maximale Katalysatortemperatur TSKMX offenbar zu hoch angesetzt, der Katalysator kann nicht mehr einspeichern. Es wird im Schritt S26 daher TSKMX um TDEL vermindert. Bewegt sich der NOx-Speicherkatalysator aber im Bereich von höchstens TDEL unter TSKMX mit noch ausreichender NOx-Einspeicherung (Abfrage S27), so wird ermöglicht, eine Konvertierung auch bei noch höheren Temperaturen vorzunehmen, indem TDEL zu TSKMX addiert wird (Schritt S28).

Der Hochtemperatur- und Niedertemperaturzweig werden in der Abfrage S29, die überprüft, ob die Bedingung TSKMN<TSK<TSKMX gilt, zusammengeführt. Ist die Bedingung S29 erfüllt, so wird im Schritt S30 der Magerbetrieb freigegeben. Ist die Bedingung S29 nicht erfüllt, so wird der Magerbetrieb im Schritt S31 gesperrt.

Der oben erläuterte Algorithmus zur Änderung der maximal und minimal zulässigen Katalysatortemperatur in Abhängigkeit von der bestimmten Magerintervalldauer T_MAG führt zu den gleichen Ergebnissen, wenn anstelle der Magerintervalldauer die Regenerationsintervalldauer mittels beispielsweise einer λ-Sonde bestimmt und im Algorithmus eingesetzt wird. Anstelle der Parameter niedere minimale und hohe minimale Magerintervalldauer müssen dann entsprechende niedere minimale und hohe minimale Regenerationsintervalldauern verwendet werden. Ferner können die niederen und hohen minimalen Mager- bzw. Regenerationsintervalldauem für den Nieder- und Hochtemperaturzweig gleich sein.

Wird anstelle eines Einzonen-Temperaturmodelles des NOx-Speicherkatalysators ein Mehrzonen-Temperaturmodell verwendet, so kann der Magerbetrieb freigegeben werden, wenn ein applizierbarer Bereich des Katalysators (z. B. 50%) wärmer ist als TSKMN bzw. kälter ist als TSKMX. Das heißt, daß für den Niedertemperaturzweig der jeweils wärmere Teil des Katalysators zur Beurteilung herangezogen wird und für den Hochtemperaturzweig der jeweils kältere Teil des Katalysators.

### BEZUGSZEICHENLISTE

- 1: Motor
- 2: Vorkatalysator
- 3: NOx-Absorber-Katalysator
- 4: NOx-Sensor und/oder λ-Sonde
- 5: Motorsteuergerät
- S1: Wechsel in den Magerbetrieb
- S2: Initialisierung von MNONK
- S3: Integration NOx-Massenstrom nach Katalysator
- S4: Schwellwert erreicht?
- S5: Status "mager"?
- S6: Regeneration anfordern
- S7: Gespeicherte NOx-Masse erfordert Regeneration?
- S8: Keine Regeneration anfordern
- S9: Initialisierung von T_MAG und Aktivierung Zeitzähler
- S10: Bestimmung Magerintervalldauer T_MAG
- S20: TSK < THR
- S21: T_MAG < TSWNT
- S22: TSKMN = TSKMN + TDEL
- S23: TSK - TSKMN < TDEL
- S24: TSKMN = TSKMN - TDEL
- S25: T_MAG < TSWHT
- S26: TSKMX = TSKMX - TDEL
- S27: TSKMX - TSK < TDEL
- S28: TSKMX = TSKMX + TDEL
- S29: TSKMN < TSK < TSKMX
- S30: Magerbetrieb freigeben
- S31: Magerbetrieb sperren
- J: Ja
- N: Nein
- TSK: Temperatur des Speicherkatalysators
- TSKMN: Minimale zulässige Katalysatortemperatur
- TSKMX: Maximale zulässige Katalysatortemperatur
- TDEL: Temperaturintervall
- T_MAG: Dauer des Mager- oder Regenerationsintervalls
- THR: Schwellentemperatur
- TSWNT: Minimal zulässige Mager- oder Regenerationsintervalldauer im Niedertemperaturzweig
- TSWHT: Minimale zulässige Mager- oder Regenerationsintervalldauer im Hochtemperaturzweig

## Patentansprüche

1. Verfahren zur Regelung eines NOx-Absorber-Katalysators (3) einer mager betreibbaren Brennkraftmaschine (1), **dadurch gekennzeichnet, daß** der Magerbetrieb in Abhängigkeit von der Katalysatortemperatur (TSK) freigegeben wird, wobei der Magerbetrieb gesperrt wird, wenn die Katalysatortemperatur (TSK) kleiner als eine vorbestimmte minimale Katalysatortemperatur (TSKMN) oder größer als eine vorgegebene maximale Katalysatortemperatur (TSK TIX) ist, wobei die minimale Katalysatortemperatur (TSKMN) um ein vorgegebenes Temperaturintervan (TDEL) erhöht wird, wenn die Katalysatortemperatur (TSK) unter einer vorbestimmten Schwelltemperatur (THR) liegt und eine Mager- oder Regenerationsintervalldauer (T_MAG) kleiner als eine vorgegebene minimale niedere Mager- oder Regenerationsintervalldauer (TSWNT) ist, bzw. die maximale Katalysatortemperatur (TSKMX) um das vorgegebene Temperaturintervall (TDEL) erniedrigt wird, wenn die Katalysatortemperatur (TSK) oberhalb der vorbestimmten Schwelle (THR) liegt, falls die Mager- oder Regenerationsintervalldauer (T_MAG) kleiner als eine vorgegebene minimale hohe Mager- oder Regenerationsintervalldauer (TSWHT) ist.

2. Verfahren nach Anspruch 1, **dadurch gekennzeichnet, daß** die minimale Katalysatortemperatur (TSKMN) um einen vorgegebenen Temperaturbetrag (TDEL) erniedrigt wird, wenn die Katalysatortemperatur (TSK) unter einer vorbestimmten Schwelltemperatur (THR) liegt, die Differenz aus Katalysatortemperatur (TSK) und minimaler Katalysatortemperatur (TSKMN) kleiner als der Temperaturbetrag (TDEL) und die Mager-oder Regenerationsintervalldauer (T_MAG) länger als die niedere minimale Mager- oder Regenerationsintervalldauer (TSWNT) ist, bzw. die maximale Katalysatortemperatur (TSKMX) um den vorgegebenen Temperaturbetrag (TDEL) erhöht wird, wenn die Katalysatortemperatur (TSK) oberhalb der vorbestimmten Schwelle (THR) liegt, die Differenz aus maximaler Katalysatortemperatur (TSKMX) und Katalysatortemperatur (TSK) kleiner als das Temperaturintervall (TDEL) und die Mager- oder Regenerationsintervalldauer (T_MAG) länger als die hohe minimale Mager- oder Regenerationsintervalldauer (TSWHT) ist.

3. Verfahren nach einem der Ansprüche 1 oder 2, **dadurch gekennzeichnet, daß** der Magerbetrieb gesperrt wird, wenn die Katalysatortemperatur (TSK) kleiner als eine vorbestimmte minimale Katalysatortemperatur (TSKMN) oder größer als eine vorgegebene maximale Katalysatortemperatur (TSKMX) ist.

## Claims

1. Method for regulating an NOx absorber catalytic converter (3) of an internal combustion engine (1) which can be operated in lean-burn mode, **characterized in that** lean-burn operation is enabled as a function of the catalytic converter temperature (TSK) lean-burn operation being blocked if the catalytic converter temperature (TSK) is lower than a predetermined minimum catalytic converter temperature (TSKMN) or is greater than a predetermined maximum catalytic converter temperature (TSKMX), the minimum catalytic converter temperature (TSKMN) being increased by a predetermined temperature interval (TDEL) if the catalytic converter temperature (TSK) is below a predetermined threshold temperature (THR) and a lean-burn or regeneration interval duration (T_MAG) is shorter than a predetermined minimum low lean-burn or regeneration interval duration (TSWNT), or the maximum catalytic converter temperature (TSKMX) being reduced by the predetermined temperature interval (TDEL) if the catalytic converter temperature (TSK) is above the predetermined threshold (THR), in case the lean-burn or regeneration interval duration (T_MAG) is shorter than a predetermined minimum high lean-burn or regeneration interval duration (TSWHT).

2. Method according to Claim 1, **characterized in that** the minimum catalytic converter temperature (TSKMN) is reduced by a predetermined temperature amount (TDEL) if the catalytic converter temperature (TSK) is below a predetermined threshold temperature (THR), the difference between catalytic converter temperature and minimum catalytic converter temperature (TSKMN) is lower than the temperature amount (TDEL) and the lean-burn or regeneration interval duration (T_MAG) is longer than the low minimum lean-burn or regeneration interval duration (TSWNT), or the maximum catalytic converter temperature (TSKMX) is increased by the predetermined temperature amount (TDEL) if the catalytic converter temperature (TSK) is above the predetermined threshold (THR), the difference between maximum catalytic converter temperature (TSKMX) and catalytic converter temperature (TSK) is lower than the temperature interval (TDEL) and the lean-burn or regeneration interval duration (T_MAG) is longer than the high minimum lean-burn or regeneration interval duration (TSWHT).

3. Method according to either of Claims 1 and 2, **characterized in that** lean-burn operation is blocked if the catalytic converter temperature (TSK) is lower than a predetermined minimum catalytic converter temperature (TSKMN) or is greater than a predetermined maximum catalytic converter temperature (TSKMX).

## Revendications

1. Procédé de régulation d'un catalyseur absorbeur de NOₓ (3) d'un moteur à combustion interne (1) fonctionnant en mode pauvre, **caractérisé en ce que** le mode pauvre est amorcé en fonction de la température (TSK) du catalyseur (1), le mode pauvre étant bloqué lorsque la température du catalyseur (TSK) est inférieure à une température minimale prédéfinie de catalyseur (TSKMN) ou est supérieure à une température maximale prédéfinie de catalyseur (TSKMX), la température minimale du catalyseur (TSKMN) étant augmentée d'un intervalle de température prédéterminé (TDCL) lorsque la température du catalyseur (TSK) se situe en dessous d'une température de consigne prédéterminée (THR) et qu'une durée d'intervalle de régénération ou pauvre (T_MAG) est inférieure à une durée d'intervalle de régénération ou pauvre inférieure minimale prédéterminée (TSWNT), ou bien la température maximale du catalyseur (TSKMX) est abaissée de l'intervalle de température prédéfini (TDEL) lorsque la température du catalyseur (TSK) est au-dessus du seuil prédéterminé (THR), au cas où la durée d'intervalle de régénération ou pauvre (T_MAG) est inférieure à une durée d'intervalle de régénération ou pauvre minimale haute prédéfinie (TSWHT).

2. Procédé selon la revendication 1, **caractérisé en ce que** la température minimale de catalyseur (TSKMN) est abaissée d'une valeur de température prédéfinie (TDEL) lorsque la température de catalyseur (TSK) est en dessous d'une température seuil prédéterminée (THR), que la différence entre la température du catalyseur (TSK) et la température minimale du catalyseur (TSKMN) est inférieure à la valeur de température (TDEL) et que la durée de l'intervalle de régénération ou pauvre (T_MAG) est plus longue que la durée d'intervalle de régénération ou pauvre minimale inférieure (TSWNT), ou la température maximale de catalyseur (TSKMX) est augmentée de la valeur de température prédéfinie (TDEL) lorsque la température de catalyseur (TSK) est au-dessus du seuil prédéfini (THR), que la différence entre la température maximale de catalyseur (TSKMX) et la température de catalyseur (TSK) est inférieure à l'intervalle de température (TDEL) et que la durée de l'intervalle de régénération ou pauvre (T_MAG) est plus longue que la durée de l'intervalle minimal de régénération ou pauvre (TSWHT).

3. Procédé selon l'une quelconque des revendications 1 ou 2, **caractérisé en ce que** le mode pauvre est bloqué lorsque la température de catalyseur (TSK) est inférieure à une température de catalyseur minimale prédéfinie (TSKMN) ou est supérieure à une température de catalyseur maximale prédéfinie (TSKMX) .
